# EUROPÄISCHE PATENTANMELDUNG

(11) **EP 0 920 797 A1**
(43) Veröffentlichungstag der Anmeldung: **09.06.1999**
(21) Anmeldenummer: 98121343.2
(22) Anmeldetag: 10.11.1998
(51) Int. Cl.: A01D 17/10, B65G 15/52

(54) **Steilförderer für landwirtschaftliche Erntemaschinen**

(30) Priorität: 03.12.1997 DE 19753510
(71) Anmelder: ARTEMIS Kautschuk- und Kunststofftechnik GmbH & Cie, D-30559 Hannover (DE)
(72) Erfinder: Tjabringa, Heiko, 9628 CM Siddeburen (NL)
(74) Vertreter: Depmeyer, Lothar

(57) **Zusammenfassung**

Die Erfindung betrifft einen Steilförderer für landwirtschaftliche Erntemaschinen mit einem umlaufenden Förderer mit quer gerichteten, vorspringenden Mitnehmern (5), die an ihren Enden bzw. zu beiden Seiten mit einem sich über die Höhe der Mitnehmer erstreckenden Pfosten (6) versehen sind. Zur Schonung des Fördergutes z.B. Kartoffeln und zur Verringerung des Gewichtes der vorgenannten Mitnehmer wird erfindungsgemäss der hauptsächlich wirkende Teil der Mitnehmer von einem biegsamen Streifen gebildet, der aus einem Netz (9) besteht und an seinen Enden mit den Pfosten verbunden ist.

## Beschreibung

Die Erfindung bezieht sich auf einen für Knollenfrüchte, insb. Kartoffeln, bestimmten, umlaufenden Steilförderer an landwirtschaftlichen Erntenmaschinen mit zwei oder mehreren einander parallelen, zugfesten, biegsamen, in Förderrichtung umlaufenden Bändern mit über die Bandlänge verteilt angeordneten, quer gerichteten, vorspringenden Mitnehmern, die einen an ihren Enden mit den Bändern verbundenen biegesteifen Stab und im Bereich der Bänder mit einem sich im wesentlichen über die Höhe des Mitnehmers erstreckenden Pfosten versehen sind.

Bei den bekannten Förderen dieser Art stehen die im Bereich der Bänder befindlichen Pfosten über Querstangen aus Stahl in Verbindung. Abgesehen davon, dass derartige Mitnehmer ein nicht unerhebliches Gewicht aufweisen, können sie am Fördergut Schäden anrichten. Ferner ist bereits vorgeschlagen worden, die Mitnehmer vollwandig aus Gummi oder gummiähnlichen Stoffen herzustellen. Bei diesen Mitnehmern wird das Fördergut zwar geschont, doch haben auch sie ein vergleichsweise grosses Gewicht.

Der Erfindung liegt die Aufgabe zugrunde, für Förderer der eingangs erwähnten Art Mitnehmer vorzuschlagen, die einerseits das Fördergut schonen und andererseits auch noch über ein vergleichsweise geringes Gewicht verfügen.

Zur Lösung diese Aufgabe wird der hauptsächlich wirkende Teil des Mitnehmers von einem biegsamen Streifen gebildet, der aus einem Netz besteht und an seinen Enden an den Pfosten befestigt ist, wobei zweckmässigerweise die fadenförmigen Festigkeitsträger des Netzes an ihren Kreuzungspunkten schubfest miteinander verbunden sind. Dieser den aktiven Teil des Mitnehmers und somit das Fördergut aufnehmende Teil des Mitnehmers ist aufgrund seiner biegsamen, fadenförmigen Festigkeitsträger im gewissen Sinne nachgiebig, jedoch fest genug, um z.B. Kartoffeln zu fördern. Zudem wird durch die erwähnten Festigkeitsträger das Fördergut geschont. Ausserdem ist der genannte Streifen von geringem Gewicht.

Vorzugsweise wird der untere Rand des Streifens an einem steifen Querstab befestigt, der mit seinen Enden an den Bändern des Förderers befestigt ist und ggfs. auch die beiden genannten Pfosten tragen kann. Die oberen Ränder des Streifens können zudem mit zu ihrer Randversteifung dienenden Einlagen versehen sein.

Weitere Einzelheiten der Erfindung werden anhand der Zeichnung erläutert, in der Ausführungsbeispiele der Erfindung dargestellt sind. Es zeigen :
Fig. 1 eine Teildraufsicht auf ein endloses, umlaufendes Band für einen Steilförderer an einer Kartoffelerntemaschine,
Fig. 2 einen Schnitt nach der Linie II - II von Fig. 1,
Fig. 3 einen Schnitt nach der Linie III - III von Fig. 2,
Fig. 4 einen Schnitt nach der Linie IV - IV von Fig. 2,
Fig. 5 einen der Fig. 4 entsprechenden Schnitt, jedoch unter Abwandlung der Ausführung, und
Fig. 6 eine Teildraufsicht auf ein Netz für einen Mitnehmer nach der Erfindung.

Der in Richtung des Pfeiles 1 umlaufende Steilförderer weist an beiden Rändern zugfeste Bänder 2 aus gummiertem Gewebe mit flach rechteckigem Querschnitt auf. Sie dienen zur Befestigung von quer verlaufenden, steifen Stäben 3 und 4, deren Enden durch Nietung und dgl. befestigt sind. Die Stäbe 4 dienen zur Bildung von Mitnehmern 5; die Stäbe 3 befinden sich zwischen benachbarten Mitnehmern 5. Der Stababstand ist der Grösse des Fördergutes angepasst.

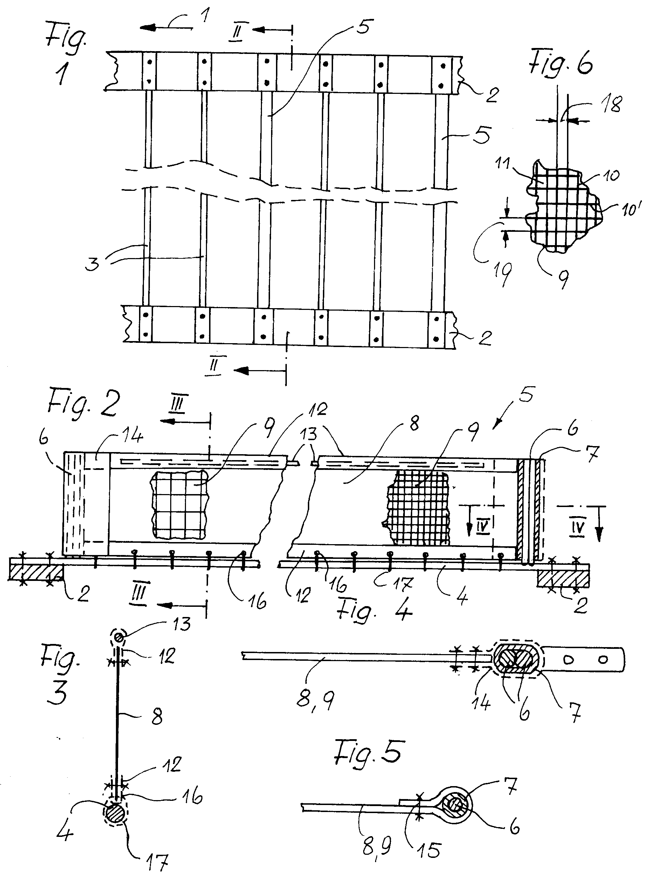

Im Bereich der Bänder 2 sind an den Stäben 4 senkrecht abstehende Pfosten 6 durch Schweissen befestigt, die gemäss Fig. 2 und 4 in Doppelanordnung und gemäss Fig. 5 in Einzelanordnung vorgesehen sein können. Zur Schonung des Fördergutes sind die Pfosten 6 von einem elastisch verformbaren Schlauch 7 umkleidet. An diesen Pfosten 6 ist ein Streifen 8 befestigt, der im wesentlichen aus einem Netz 9 mit fadenförmigen Festigkeitsträgern 10, 10' besteht, die an ihren Kreuzungspunkten schubfest verbunden sind und etwa quadratische Durchbrechungen 11 umschliessen.

Der Streifen 8 ist am oberen und unteren Rand mit einer Randverstärkung 12 versehen, die durch ein u-förmige gelegtes Grewebe gebildet wird, das durch Nähen od. dgl. befestigt ist. Die oben gelegene Randverstärkung 12 kann zur Aufnahme eines eingesteckten Stabes 13 zur Randversteifung dienen.

Der Streifen 8 ist gemäss Fig. 2 und 3 an seinen Enden durch einen biegsamen, durch Annähen od. dgl. befestigten Kunststoffstreifen 14 befestigt, der die Pfosten 6 umschliesst und das Ende des Netzes 9 zwischen sich aufnimmt. Bei der Ausführung gemäss Fig. 5 hingegen ist der Streifen 8 bzw. sein Netz 9 um die Pfosten 6 herumgeführt und an der Doppelung bei 15 vernäht.

Um den für sich gefertigten Streifen 8 nach Fertigstellung des Stabes 4 mit den meist angeschweissten Pfosten 6 nachträglich anbringen zu können, wird der an seinen Enden enstsprechend vorbereitete Streifen 8 auf die Pfosten 6 aufgeschoben und dann am unteren Rand mit dem Stab 4 verbunden. Dazu hat die untere Randverstärkung 12 Metallösen 16 erhalten, und zwar zur Aufnahme von schmalen Streifen, Fäden od. dgl. 17, die um die Stäbe 4 geschlungen sind.

Wie aus Fig. 2 ersichtlich ist, können unterschiedlich weit eingetellte Netze 9 benutzt werden. Die Netzweite bzw. die Masse 18, 19 sollten jedoch vorzugsweise etwa 1 - 3 cm sein, jedoch können sie auch Werte von etwa 5cm erhalten, wenn z.B. Rüben gefördert werden sollen. Wie aus der Zeichnung erkennbar ist, sollen die Festigkeitsträger 10,10' im rechten Winkel zueinander verlaufen, wobei ein Festigkeitsträger 10 sich in Richtung des Streifens 8 erstrecken soll.

Zur besseren Halterung auf den Bändern 2 sind die Stäbe 3,4 an ihren Enden abgeflacht; zudem können die Stäbe 4 bzw. Pfosten 6 mit kleinen Auslegern ausgestaltet sein, um die Kippsicherheit der Mitnehnmer zu erhöhen.

Aufgrund der Darstellung gemäss Fig. 1 befinden sich zwischen den Mitnehmern 5 je zwei Stäbe 3. Die Anzahl dieser Stäbe kann jedoch auch abweichend gewählt werden; zudem kann auch der Raum zwischen benachbarten Mitnehmern 5 durch ein Netz nach Art des Netzes 9 - ggfs. durch eine oder mehrere Stäbe 3 unterstützt - überbrückt sein.

## Patentansprüche

1. Für Knollenfrüchte, insb. Kartoffeln, bestimmter, umlaufender Steilförderer an landwirtschaftlichen Erntemaschinen mit zwei oder mehreren einander parallelen, zugfesten, biegsamen, in Förderlängsrichtung umlaufenden Bändern mit über die Bandlänge verteilt angeordneten, quer verlaufenden, vorspringenden Mitnehmern, die einen an ihren Enden mit den Bändern verbundenen biegesteifen Stab und im Bereich der Bänder mit einem sich im wesentlichen über die Höhe des Mitnehmers erstreckenden Pfosten versehen sind, dadurch gekennzeichnet, dass die Mitnehmer (5) einen sich im wesentlichen von einem zum gegenüberliegenden Band (2) erstreckenden biegsamen Streifen (8) aufweisen, der praktisch aus einem Netz (9) besteht und an seinen Enden mit den Pfosten (6) verbunden ist.

2. Förderer nach Anspruch 1, dadurch gekennzeichnet, dass die fadenförmigen Festigkeitstäger (10) des Netzes (9) an ihren Kreuzungsstellen schubfest miteinander verbunden sind.

3. Förderer nach Anspruch 1, dadurch gekennzeichnet, dass die ein Teil der Festigkeitsträger (10) sich in Richtung deds Streifens (8) erstreckt, während die anderen Festigkeitsträger im rechten Winkel dazu verlaufen.

4. Förderer nach Anspruch 3, ddurch gekennzeichnet, dass die lichte Netzweite etwa 1 - 5 cm, vorzugweise aber 1 - 3 cm beträgt.

5. Förderer nach Anspruch 1, dadurch gekennzeichnet, dass der Streifen (8) am oberen und unteren Rand mit Verstärkungen (12) versehen ist.

6. Förderer nach Anspruch 5, dadurch gekennzeichnet, dass die Verstärkungen (12) ein den Netzrand umschliessender, angenähter Gewebestreifen ist.

7. Förderer nach Anspruch , dadurch geknnzeichnet, dass der untere Rand des Streifens (8) durch Fäden od. dgl. (17) am Stab (4) gehalten ist, die den Streifen durchsetzen und um den Stab herumgeführt sind.

8. Förderer nach Anspruch 1, dadurch gekennzeichnet, dass die Enden des Streifens (8) durch einen Kuntstoffstreifen (14) od. dgl. an den Pfosten (6) befestigt sind, der das Streifenende zwischen sich einschliesst und den Pfosten umschliest.

9. Förderer nach Anspruch 1, dadurch gekennzeichnet, dass das Streifenende um die Pfosten (6) herumgeführt und das herumgeführte Ende mit dem Streifen verbunden ist (Fig. 5).

10. Förderer nch Anspruch 1, dadurch gekennzeichnet, dass die mit dem Stab (4) verbundenen Pfosten (6) eine elastisch verformbare Umkleidung (7) aufweisen.

11. Förderer nach Anspruch 1, dadurch gekennzeichent, dass sich der Streifen (8) im wesentlichen über die Höhe der Pfosten (6) erstreckt.

12. Förderer nach Anspruch 1, dadurch gekennzeichnet, dass der obere Rand des Streifens (8) durch einen sich im wesentlichen über die Streifenlänge erstreckenden Stab (13) versteift ist.

13. Förderer nach Anspruch 5 und 12, dadurch gekennzeichnet, dass der Stab (13) in die Verstärkung (12) eingeschoben bzw. von dieser umschlossen ist.

14. Förderer nach Anspruch 1, 2 und 4, dadurch gekennzeichnet, dass der Raum zwischen aufeinander folgenden Mitnehmern (5) durch ein etwa in der Ebene der Bänder (2) befindliches Netz (9) ggfs. durch einen oder mehrere Stäbe (3) unterstützt überbrückt ist.
